## Europäisches Patentamt

## European Patent Office

## Office européen des brevets

(19)

(11) Publication number: **0 117 745**
**A1**

(12)

# EUROPEAN PATENT APPLICATION

(21) Application number: **84301239.4**

(22) Date of filing: **27.02.84**

(51) Int. Cl.³: **A 01 C 5/06**

(30) Priority: **28.02.83 AU 8237/83**
**09.06.83 AU 9767/83**

(43) Date of publication of application: **05.09.84**
**Bulletin 84/36**

(84) Designated Contracting States: **DE FR GB**

(71) Applicant: **RYAN SCARAVATOR PTY. LTD., Henty Highway, Warracknabeal Victoria (AU)**

(72) Inventor: **Ryan, Austin Timothy, 19 Hewitt Street, Warracknabeal Victoria (AU)**

(74) Representative: **Fentiman, Denis Richard et al, Elkington and Fife High Holborn House 52/54 High Holborn, London WC1V 6SH (GB)**

(54) **Coulter seeder apparatus.**

(57) Direct drill seeder apparatus includes a support member (14), and a coulter (24, 25) depending from the support member and positionable to cut a narrow furrow as the apparatus moves over ground to te sown. The arrangement is such that the furrow extends in the direction of the coulter. A seed supply tube (26) is positionable to deliver seed to the furrow laterally of the coulter cutting edge, and a trailing press wheel (28) is mounted to the support member (14) for closing over the furrow to cover the seed delivered to the furrow.

EP 0 117 745 A1

"COULTER SEEDER APPARATUS"

This invention relates to the sowing of crops and in particular to the sowing of land according to the principles of "no till" farming. Sowing carried out in this way is also referred to as "direct drilling".

In the conventional crop rotation practised by wheat farmers and other grain producers, animals are grazed for a period on the stubble which remains after harvesting. Thereafter, the stubble is ploughed into the ground, and the paddock left fallow until the next sowing. It is now suggested that the resulting decaying matter encourages the establishment of some of the diseases which are detrimental to optimum yields. Moreover, the traditional practice leaves the soil exposed and unprotected while fallow, facilitating drying out to considerable depth and the development of dust storms during dry seasons.

It has been proposed that the traditional practice be displaced in favour of no till farming in which the stubble remains upright and the paddock is sown by direct drilling, that is substantially without cultivation, by employing coulters to cut through the underlying soil to form an opening for the receipt of seed. In one known arrangement, each opening is a narrow cut which extends in the plane of the respective coulter. In another, a trio of coulters are employed to form a furrow, one making an original cut while the other two trail behind to widen the cut. A third proposal also entails a wider furrow cut by a dished coulter. The twin problem is to achieve a satisfactory germination rate while pulling a frame of reasonable width with an adequate number of sowing boots and associated coulters through large paddocks of stubble without the mud and stubble clogging and snagging the coulters and boots. The problem is compounded in wet and muddy conditions, and is not wholly solved by any of the abovementioned known arrangements, notwithstanding the accepted advantages, in principle at least, of direct drill sowing.

It is accordingly an object of the invention to provide seeder apparatus capable of successful direct drill sowing of wheat and other crops, especially other grain crops.

The invention provides seeder apparatus comprising:

a support member;

a coulter depending from the support member and positionable to cut a narrow furrow as the apparatus moves over ground to be sown, which furrow extends in the direction of travel at a finite angle to the cutting edge of the coulter;

a seed supply tube positionable to deliver seed to the furrow laterally of said cutting edge; and

a trailing press wheel mounted to the support member for closing over the furrow to cover the seed delivered to the furrow.

The coulter is preferably a rotatable coulter disc mounted to the support member in a manner permitting fine angular adjustment of the plane of the disc with respect to the support and said direction of travel, whereby to vary the width of the furrow. The adjustment may be incremental and the range desirably includes the straight position, i.e. where the plane of the coulter is parallel to the direction of travel so that the seeder can also be used for simple aeration of the soil without furrowing. The coulter disc is advantageously at least 50 cm in diameter.

Most preferably, the seed supply tube is fitted with an oblique separating blade which is arranged to make linear contact with the side face of the coulter disc ahead of the tube in said direction of travel, thereby sliding over the disc as the latter rotates and defining with the disc a broadly V-section space for the tube. This blade helps to clear the coulter of soil and other material, especially mud when working in wet conditions, and to prevent snagging of the tube by the straw.

4

The seed supply tube is preferably associated with means to adjust the position of the mouth of the tube vertically and/or in said direction of travel. Further means may be provided to rotate the tube and so ensure the aforesaid linear contact between the separating blade and the coulter disc.

Advantageously, the apparatus further comprises means for retractably moving the press wheel forward to a position in which the front of the press wheel is ahead of the rear of the coulter disc and on the opposite side of the disc from the seed supply tube, for dislodging soil carried by the disc. The press wheel is preferably mounted to the support member in an arrangement permitting variation of the inclination of the rotational axis of the press wheel.

The invention will now be further described, by way of example only, with reference to the accompanying drawings, in which:

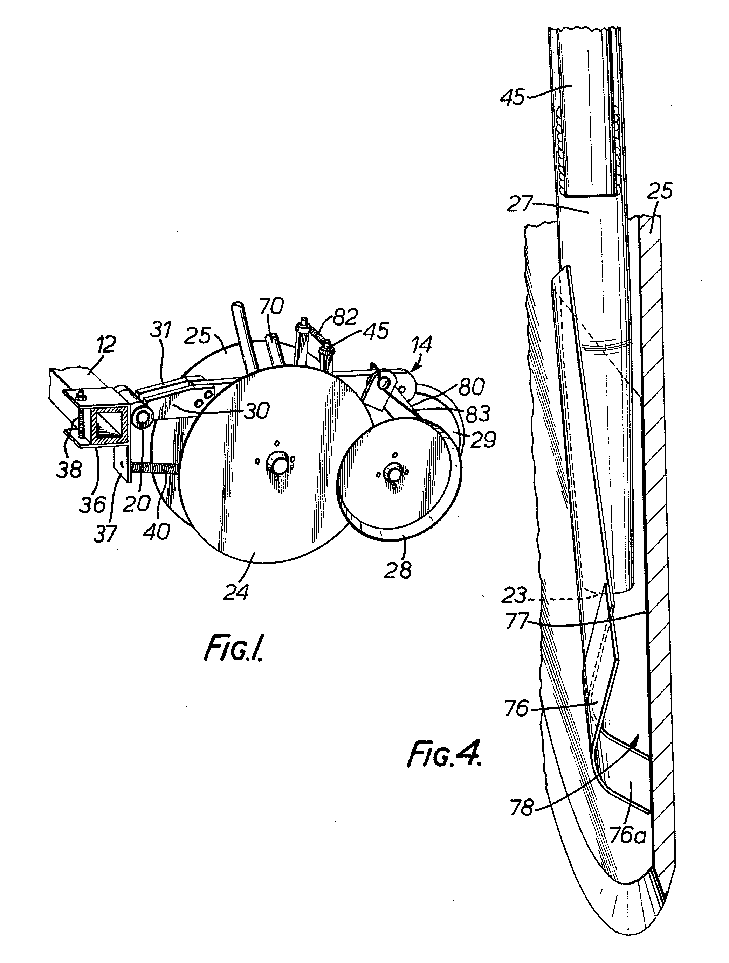

FIGURE 1 is a perspective view of one twin seeder unit of a direct drill wideline seeder, the unit being constructed in accordance with the invention;

FIGURE 2 is a side elevation of the seeder unit with the near coulter disc and press wheel removed;

FIGURE 3 is a plan view of the seeder unit; and

FIGURE 4 is a cross-section on the line 4-4 in Figure 3.

The illustrated dual seeder unit 10 would typically be one of multiple units suspended from a conventional wideline agricultural frame of box section components. The unit is in fact mounted to and trails from a single cross-beam 12 of the frame (not otherwise shown). The frame generally includes ground wheels, and forward draft means for attachment of the frame behind a tractor, although this is not to preclude application of the invention to a self-propelled machine. Moreover, the frame would need to include or be associated with additional equipment for storing, metering and delivering seed, and perhaps fertilizer, to each unit. Such equipment would very conveniently comprise an air seeder such as that disclosed in applicant's prior Australian Patent Application No. 67992/81. The main load bearing component of unit 10 is a heavy duty beam 14 comprising a single elongate metal plate which is hinged at its forward end, in a manner to be detailed, about a horizontal hinge pin 20.

Beam 14 serves as a support for a pair of large diameter coulter discs 24, 25; a pair of forwardly and downwardly depending seed supply tubes 26, 27 coupled to flexible conduits 70 to receive seed from the aforementioned equipment (not shown) for delivery, via mouths 23, to the ground laterally inwardly of coulters 24, 25; and respective press wheels 28, 29 which trail behind the coulters.

Beam 14 is firmly bolted to a pair of plates 30, 31 which are in turn welded to a centre knuckle 32 on hinge pin 20. A further pair of knuckles 34 on the pin are welded in turn to a U-section mounting bracket 36 which is clamped, by means of bolt 38, on cross-beam 12. Stump-jump means comprising a helical tension spring 40 is secured between a depending tab 37 bracket 36 and a lug 42 welded to one of a pair of registered depending plates 49, 50 the principal purpose of which will shortly be detailed.

Coulter discs 24, 25 are desirably at least 50 cm in diameter, most preferably about 65 cm. They are rotatably supported by an assembly 48 which comprises plates 49, 50 secured together and to beam 14 by an upper pair of releasable bolts 52. Hubs 54, 55 for the coulter discs are respectively plug welded to the lower rear corners of plates 49, 50. The coulter discs are normally arranged with their planes slightly inclined to arm 14 and to each other, and accordingly to the direction of travel of the frame determined by the ground wheels (i.e. perpendicular to cross-beam 12), by means of respective set screws 56, 57 which are threadingly mounted in the plates and abut the respective side faces of beam 14. Rotation of screws 56, 57 will vary the disc angle and indeed would include a straight-ahead setting for simple soil aeration work.

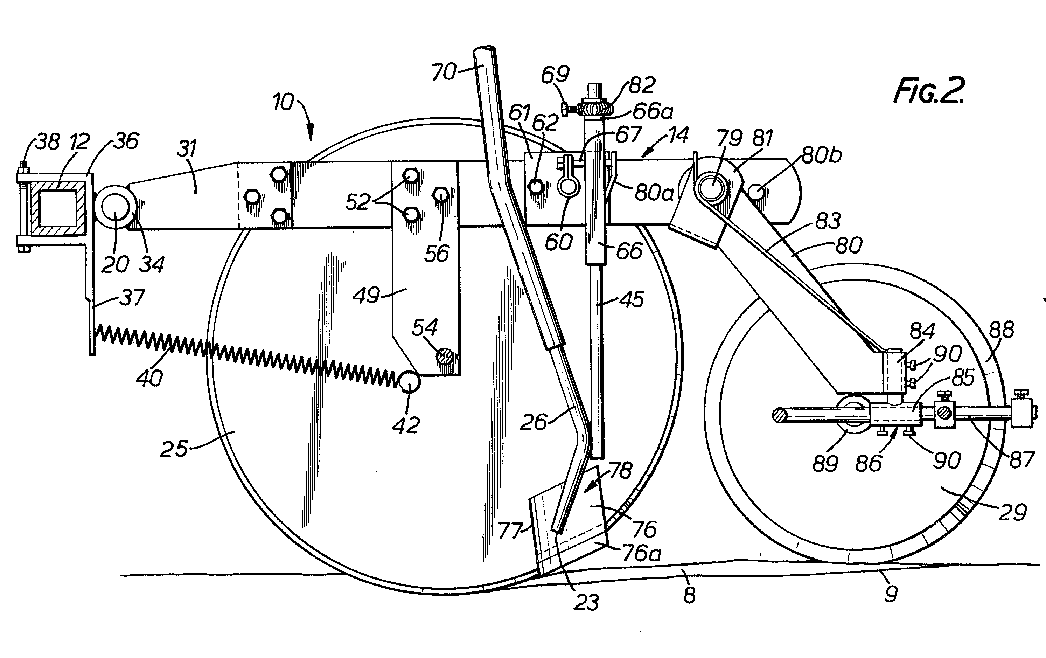

The most favoured coulter inclination, in accordance with the invention, is one in which the discs are in substantially vertical planes but are toed in towards each other at their leading edge so as to form in operation respective furrows (depicted at 8 in Figure 2) into which seed is delivered by supply tubes 26, 27 located on the insides of the coulters. Each furrow is as wide as the horizontal extend of the slightly angled disc and thus the furrow will extent in the direction of travel at a finite angle to the cutting edge of the disc. The preferred inclination to arm 14 and to the direction of travel is between 2° and 6°, most preferably about 4°.

If desired for particular sowing conditions, the coulter discs may also be toed in or out at the bottom by placing spaces on one or other of bolts 52. Set screws 56 may also be used to toe the discs outwardly at the front. A combination inclination may sometimes be favoured.

Each seed supply tube 26, 27 is secured to an upright shaft 45 which is in turn slidably and rotatably retained in a rectangular section sleeve 66 but secured at the selected position by means of a set screw 69 provided in a short upper cylindrical part 66a of sleeve 66. Screw 69 may be slackened off to permit axial and rotational adjustment of the shaft's position. The two sleeves 66 fixedly carry respective studs 67 retained in clamps 60 on respective lugs which project integral laterally from an inverted

8

U-section carriage 61. Carriage 61 is slidable on beam 14 to any selected position maintained by a set screw 62.

It will be seen that each shaft 45 is translatable axially and rotationally on release of set screws 69, and that the whole supply tube assembly is both detachable and pivotable about a horizontal axis on slackening of clamp 60. In this way, the position of the mouth 23 of each supply tube can be separately adjusted both vertically and in the direction of travel.

Seed supply tubes 26, 27 are fitted, by welding, with oblique separating plates or blades 76 which, as best seen in Figure 4, are in the shape of a parallelogram slightly bent on a non-diagonal line and extend across and in front of the path of the respective tube. Each blade 76 is inclined and bent so as to make substantial linear contact, along an edge 77, with the side face of the respective coulter disc 24, 25 ahead of the tube 26, 27 in the direction of travel. The blade thereby slides over the disc as the latter rotates and defines with the disc a broadly V-section space 78 for the lower end of the seed supply tube 26, 27. Edge 77 is hardened to reduce wear, and the lower edge of the blade is fitted with a flexible rubber flap 76a. This flap prevents jamming of the blade and also guards against seed bounce.

Blades 76 help to clear the coulter discs of soil and other material, especially mud when working in wet conditions, and to prevent snagging of the seed supply tubes by the straw. It is further found that the blades help to sustain the furrows formed by the coulter discs as the seed is deposited, by deflecting loose soil and straw: the soil is guided about the rear edge of the blade and tends to drop back into the furrow for pressing before the straw, which thereby remains on top.

To ensure sustained linear contact between each blade edge 77 and the associated coulter disc 24, 25, each stud 67 carries a depending leaf 80a of spring steel or the like which resiliently presses against the inside face of sleeve 68 below stud 67 to bias the respective blade 76 outwardly against its coulter disc. In addition, a helical compression spring 82 couples the upper ends of sleeves 66, held in place by set screws 69, to draw the tops of shafts 45 towards each other by rotation on studs 67.

If desired, the coupled pair of seed supply tubes 26, 27 may be provided with its own independent stump-jump action by instead securing clamp 60 to the trailing end of a lever arm (not shown) which normally rests on primary arm 14 and is pivoted to the latter ahead of the coulter axis. With this arrangement, the separating blades remain adjacent the side surface of the coulters during retractive or other pivotal movement about the pivot. If a blade 76 were to drop behind the rim of the associated coulter 24, 25, it may remain locked there, and not return to the working position.

To allow for marginal tolerances in the vertical alignments of coulter discs 24, 25, which might otherwise result in excessive contact between the discs and edges 77 of separating blades 76, shafts 45 extend upwardly outwardly at a very small angle (say between $\frac{1}{2}°$ and 3°) to the vertical. This inclination is evident in Figure 4 and may be adjustable, e.g, by setting clamps 60 further out from carriage 10.

In order to break up straw or mud or other "trash" or debris which may collect and perhaps bridge between the coulter discs 24, 25 and/or separating blades 76, one of the hubs 55 may be tangentially fitted with a length of strong flexible rope, e.g. wire rope or cord (not shown), which rotates with the respective disc, passing between blades 76 during each revolution.

The final principal component of unit 10 is the set of press wheels 28, 29. These are secured to a downwardly and rearwardly trailing arm 80, which is hinged to a pin 79 in the rear end of beam 14. Arm 80 is biased forwardly, to a limit set by U-section stop bracket 81, by means comprising a coil spring 83 hooked between the top edge of beam 14 and the top end of a vertically aligned boss 84 provided integrally at the lower end of arm 80. Retraction may be prevented in certain conditions by inserting a bolt in hole 80b in beam 14.

Boss 84 acts as a socket for a T-piece 86 which has a further boss 85 as its head component. Each of press wheels 28, 29 is of outwardly dished configuration with a frustoconical rim 88. It is rotatably mounted on a hub 89 attached to an L-shaped stub-axle 87 which is mounted for sliding or rotational movement in boss 85. It will be appreciated that each press-wheel 28, 29 may be raised or lowered, or toed inwardly or outwardly, by adjustment between boss 84 and T-piece 86, that both the vertical inclination of the press-wheels and their position in the direction of travel may be altered by adjustment between bosses 85 and stub axles 87. The desired positions are maintained by various set screws 90.

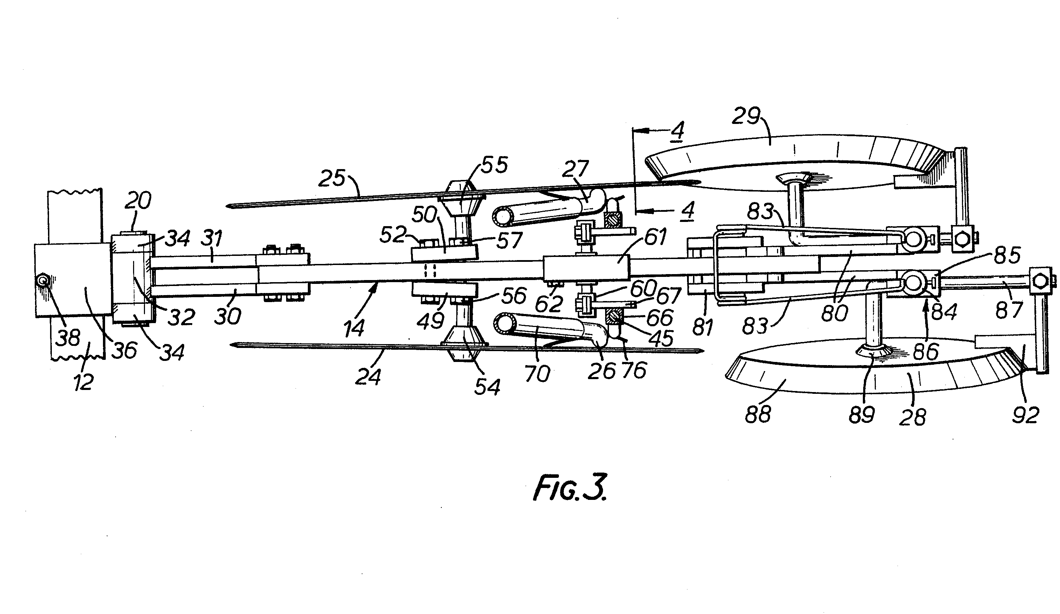

A particularly useful setting for the press wheels is shown in Figure 3 for the right hand (as viewed) wheel. By sliding stub-axle 87 forwardly in boss 85, this press-wheel has been brought forward to a position in which the front of the press-wheel is ahead of the rear of the coulter disc of the opposite side of the disc from the respective seed supply tube. In this position, especially in wet conditions, the press-wheels are useful for dislodging, collecting, and settling soil, mud or other material which becomes adhered to the outsides of the coulter discs. When this forward position is utilised, the press-wheels

12

need also to be slightly tilted to ensure they still press down on the sown furrow.

The frustoconical rim of the press-wheels is especially useful when sowing in dry conditions or in certain types of substantially water impermeable soil. Then the press-wheels can be sharply tilted so that the outer edges of the rims cut down into the pressed soil to leave a shallow ditch to reduce the buried depth of the seeds.

Press wheels 28, 29 are cleared of mud or other debris by shaped scraper blades 92 which project laterally from collars on the trailing ends of stub-axles 87.

In operation, a machine having multiple units 10 can be drawn forwardly through a paddock of stubble or grass and the paddock successfully sown with only minimal disturbance to the stubble or grass. As the machine is drawn forwardly by the tractor, coulter discs 24, 25 cut respective narrow furrows 8 (Figure 2) into which seed is directly deposited from supply tubes 26, 27. The sown furrows are then firmed down at 9 by the trailing press-wheels 28,29. The ground is substantially not ploughed and the collective narrow operating width of the ground working elements (coulter disc, tube and press wheel) permits the unit to work through the stubble without becoming snagged. Press wheels 28, 29 firm the ground substantially back to its undisturbed state and, importantly, ensure proper soil cover of the seed, so maximising the rate of germination. Blades 76 help clear the press wheels of debris, notably mud and straw, and assist in separating the earth in front of the seed supply tube. It is believed that the forward symmetrical toeing in of the coulter discs aids stability, encourages travel in a straight line, produces ground pressure on the coulters which helps force mud away from the outside surfaces of the coulters, and minimises the incidence, in some soil conditions, of picking up the whole soil between the coulter discs. The position of the tube can be adjusted axially and pivotably to suit particular types of seed or particular sowing conditions: in some cases, e.g. it may be desirable to sow the seed behind the coulter disc rather than beside it. As blades 76 inevitably wear, the tubes can be rotated in sleeves 66 to maintain sliding linear contact with the coulter discs.

For some applications, each unit 10 might be pivotable on a horizontal as well as a vertical axis: in such a case, the units would be bridged by a suitable chain to prevent collisions when turning corners.

An important advantage of the invention is the much lighter tractor power required to haul a given seeder, compared to the power necessary for a conventional cultivator-seeder combine of similar size.

14

CLAIMS:

1.   Direct drill seeder apparatus comprising a
support member, a coulter depending from the support
member, and a seed supply tube, characterized in that:

said coulter (24) is positionable to cut a narrow
furrow as the apparatus moves over ground to be sown,
which furrow extends in the direction of travel at a
finite angle to the cutting edge of the coulter; in
that

said seed supply tube (26) is positionable to
deliver seed to the furrow laterally of said cutting
edge; and in that there is further provided

a trailing press wheel (28) mounted to the
support member (14) for closing over the furrow to
cover the seed delivered to the furrow.

2.   Direct drill seeder apparatus according to claim
1, further characterized in that the coulter is a
rotatable coulter disc (24) mounted to the support
member (14) in a manner permitting fine angular
adjustment of the plane of the disc with respect to
the support and said direction of travel, whereby to
vary the width of the furrow.

3.   Direct drill seeder apparatus according to claim
2 further characterized by means (85, 87) for
retractably moving the press wheel (28) forward to a
position in which the front of the press wheel (28) is
ahead of the rear of the coulter disc (24) and on the

15

opposite side of the disc from the seed supply tube
(26), for dislodging soil carried by the disc.

4.    Direct drill seeder apparatus according to claim
2 or 3, further characterized in that the seed supply
tube (26) is fitted with an oblique separating blade
(76) which is arranged to make linear contact with the
side face of the coulter disc (24) ahead of the tube
(26) in said direction of travel, thereby sliding over
the disc as the latter rotates and defining with the
disc a broadly V-section space (78) for the tube.

5.    Direct drill seeder apparatus according to claim
4, further characterized by means (45, 66) to rotate
the seed supply tube (26) and so ensure said linear
contact between said blade and the coulter disc.

6.    Direct drill seeder apparatus according to claim
5, further characterized by means (80a, 82) biasing
said blade (76) into said linear contact.

7.    Direct drill seeder apparatus according to any
one of claims 2 to 6 characterized by a pair of said
coulter discs (24, 25) each associated with a
respective seed supply tube (26, 27) and press wheel
(28, 29), which coulter discs are toed in toward each
other at the front so that the seed supply tubes lie
between the discs.

8. Direct drill seeder apparatus according to any one of claims 2 to 7 further characterised in that the or each coulter disc is at least 50 cm in diameter.

9. Direct drill seeder apparatus according to any preceding claim further characterised by means (60, 66) to adjust the position of the mouth of the said seed supply tube (26) vertically and/or in said direction of travel.

10. Direct drill seeder apparatus according to any preceding claim further characterised in that said trailing press wheel (28) is mounted to the support member in an arrangement permitting variation of the inclination of the rotational axis of the press wheel.

11. Direct drill seeder apparatus according to claim 10 further characterised in that the press wheel has a substantially frustoconical ground engaging rim (88).

12. Direct drill seeder apparatus according to any preceding claim further characterised in that the mounting of the press wheel to the support (14) comprises an arm (80) hinged to the support (14), and associated stump-jump means (83).

13. Direct drill seeder apparatus according to any preceding claim further characterised by a scraper element (92) in close proximity to the press-wheel (26) for dislodging retained soil from the wheel.

14. Direct drill seeder apparatus according to any preceding claim further characterised in that said support is an elongate beam (14) which is pivotally mounted (20) to and trails from a cross-beam (12) of an agricultural implement fitted with ground wheels.

Fig.1.

Fig.4.

FIG.2.

2/3

011745

FIG.3.

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | FR-A-2 421 541 (AMAZONEN-WERKE H. DREYER) * Page 4, line 38 - page 6, line 28; figures 1, 2 * | 1,2 | A 01 C 5/06 |
| A | | 7 | |
| | --- | | |
| Y | DE-B-2 830 195 (AMAZONEN-WERKE H. DREYER) * Column 6, lines 16-48; column 8, line 38 - column 10, line 1; figures 3-5 * | 2 | |
| A | | 7 | |
| | --- | | |
| A | US-A-3 499 495 (W.H. PUST) * Column 2, line 40 - column 4, line 16; figures 1-3 * | 1-3 | TECHNICAL FIELDS SEARCHED (Int. Cl. 3) |
| | --- | | A 01 C 5/00 |
| A | DE-B-2 931 133 (AMAZONEN-WERKE H. DREYER) * Column 2, line 56 - column 4, line 50; figures 1-3 * | 1,2,4 | |
| | ----- | | |

The present search report has been drawn up for all claims

| Place of search BERLIN | Date of completion of the search 09-05-1984 | Examiner BERGZOLL M C |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82